# EUROPEAN PATENT SPECIFICATION

(11) **EP 2 125 545 B1**
(45) Date of publication and mention of the grant of the patent: **08.02.2012**
(21) Application number: 07834583.2
(22) Date of filing: 17.10.2007
(51) Int. Cl.: B65D 23/06, B65D 23/14

(54) **DRIP CATCHER AND METHOD**
TROPFENFÄNGER UND VERFAHREN
RAMASSE-GOUTTES ET PROCÉDÉ ASSOCIÉ

(30) Priority: 17.10.2006 NL 1032696; 02.11.2006 NL 1032804
(43) Date of publication of application: 02.12.2009
(73) Proprietor: Draisma Industriele Vormgeving, 1078 KM Amsterdam (NL)
(72) Inventor: DRAISMA, Eibert, 1078 KM Amsterdam (NL)
(74) Representative: Seitz, Holger Fritz Karl
(86) International application number: PCT/NL2007/000267
(87) International publication number: WO 2008/048091

(56) References cited:
- EP-A2- 1 190 954
- DE-A1- 10 002 608
- DE-U1- 20 306 410
- DE-U1- 29 520 510
- FR-A- 593 183
- FR-A- 964 439
- FR-A- 1 027 660
- FR-A1- 2 532 278
- FR-A1- 2 606 372
- FR-A1- 2 819 923
- GB-A- 2 146 610

## Description

The present invention relates to a drip catcher and a method therefore. Such a drip catcher has the task of collecting droplets which run down a bottle, a teapot and the like after pouring therewith.

Known from FR-964.439 is a drip catcher according to the preamble of claim 1 which consists of a ring of absorbent material provided with an elastic core. A casing of metal or plastic is arranged around the ring. The known drip catcher is however not applied in practice, or hardly so, since the production costs are relatively high for large-scale application. (Wine) bottles are therefore not sold in a form where the bottle is already provided with a drip catcher, this only being arranged when the bottle is used. Also FR-2.606.372 discloses a drip catcher according to the preamble of claim 1.

The present invention has for its object to provide a simpler drip catcher with more application options.

A drip catcher according to the present invention comprises for this purpose an at least partially elastic collecting member for collecting droplets during pouring of liquid out of the liquid container, wherein the collecting member comprises an elastic part substantially for exerting a clamping force, and an absorbent part co-acting with the elastic part for the purpose of absorbing the droplets, and characterized in that the elastic part of the collecting member comprises a core of a number of bundled elastic threads.

The construction of the drip catcher is relatively sample and therefore inexpensive. The drip catcher can therefore already be arranged round the neck of a drink-containing bottle when it is sold, thereby greatly increasing the field of application. After use the drip catcher can be discarded or reused. It acts as a means to advertise and distinguish the drink-containing bottles which are provided with the drip catcher according to the invention since, as described above, other drip catchers have been found to be too expansive for such large-scale application.

The absorbent part of the collecting member can comprise a jacket of an absorbent material arranged round the core.

The jacket is preferably relatively thin compared to the core.

The collecting member can take an annular form with an inner diameter (D1) of about 25 mm and/or a diameter (D2) of between about 1.5 and about 4 mm.

In another embodiment the drip catcher comprises a label element coupled to the collecting member.

The label element is optionally coupled releasably to the collecting member, wherein a label element detached from the collecting member comprises a second opening for the purpose of arranging the label element therewith to for instance a door handle.

The collecting member can be a disc with a thickness in the order of 1 to 2 mm.

The collecting member optionally has an outer edge with a form varying from a circle, such as a heart shape or a flower shape.

The label element is optionally a (post)card, decorative element, label and/or door hanger.

The collecting member and/or the label element are preferably provided with an imprint.

According to a further aspect, the invention provides a method for use of a drip catcher substantial as described above.

Further advantages and features of the present inventions will be elucidated with reference to the accompanying drawings, in which:
fig. 1 shows an embodiment of a drip catcher according to the present invention;
fig. 2 shows a partially broken-away perspective view of the drip catcher of fig. 1;
fig. 3 shows a bottle with a neck provided with the drip catcher of fig. 1;
fig. 4 shows a detail in cross-section along IV in fig. 3;
fig. 5 shows a top view of a second embodiment of a drip catcher according to the present invention;
fig. 6 is a bottom view of the drip catcher of fig. 5;
fig. 7 is a perspective bottom view of the drip catcher of fig. 5;
fig. 8 is a perspective top view of the drip catcher of fig. 5;
fig. 9 shows a perspective view of a bottle provided with the drip catcher of fig. 5;
fig. 10 shows the bottle of fig. 9, wherein the label element has been removed from the collecting member;
fig. 11 shows a third embodiment of a drip catcher according to the present invention;
fig. 12 shows a bottle provided with the drip catcher of fig. 11;
fig. 13 shows the bottle of fig. 12, wherein the label element has been removed from the collecting member;
fig. 19 shows a perspective bottom view of a fourth embodiment of a drip catcher according to the present invention;
fig. 20 shows a perspective top view of the drip catcher of fig. 19;
fig. 21 is a top view of the label element of the drip catcher of fig. 19;
fig. 22 is a side view of the drip catcher of fig. 19;
fig. 23 shows a bottle provided with the drip catcher of fig. 19;
fig. 27 shows a perspective bottom view of another embodiment of a drip catcher according to the present invention;
fig. 28 is a perspective top view of the drip catcher of fig_{.} 27;
fig. 29 shows another perspective bottom view of the drip catcher of fig. 27;
fig. 30 is a side view of the drip catcher of fig. 27;
fig. 31 shows a bottle provided with the drip catcher of fig. 27;
fig. 32 is a perspective view of another embodiment of a drip catcher according to the present invention;
fig. 33 is a perspective view of yet another embodiment of a drip catcher according to the invention;
fig, 34 is a top view of the collecting member of the drip catcher of fig. 32 and/or 33;
fig. 35 shows a folded-open label element of the drip catcher of fig. 32;
fig. 36 shows a folded-open label element of the drip catcher of fig. 33;
fig. 37 is a perspective view of a label element;
fig. 38 is a perspective view of another embodiment of a drip catcher according to the present invention provided with the label element of fig. 37;
fig. 39 shows the folded-open label element of fig. 37;
fig. 40 shows a bottle provided with the drip catcher of fig. 32;
fig. 41 shows a bottle provided with the drip catcher of fig. 33;
fig. 42 shows a bottle provided with the drip catcher of fig. 38;
fig. 43 shows another embodiment of a drip catcher according to the present invention;
fig. 44 is a perspective bottom view of the drip catcher of fig. 43;
fig. 45 is a perspective top view of the drip catcher of fig. 43;
fig. 46 shows another embodiment of a label element;
fig. 47 shows a drip catcher with the label element of fig. 46;
fig. 48 shows a bottle provided with the drip catcher of fig. 47;
fig. 49 shows another embodiment of a label element;
fig. 50 shows a bottle provided with the drip catcher of fig. 47 from which the label element has been removed;
fig, 51 shows another embodiment of a drip catcher according to the invention;
fig. 52-56 show label elements according to the present invention;
fig. 57 and 58 show a bottle provided with another embodiment of a drip catcher according to the invention;
fig. 59 and 60 show a bottle provided with another embodiment of a drip catcher according to the invention;
fig. 61 and 62 show another embodiment of a drip catcher according to the present invention;
fig. 63 and 64 show a bottle provided with the drip catcher of fig. 61;

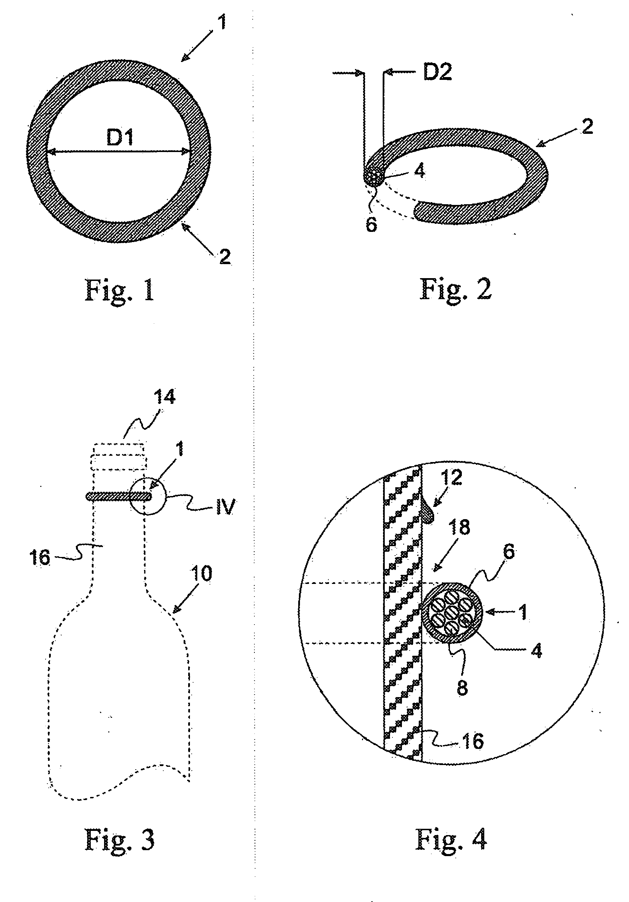

A drip catcher according to the present invention comprises in a first embodiment a collecting member 2 (fig. 1) which is annular. The annular collecting member 2 comprises a core 4 (fig. 2) around which a jacket 6 is arranged. As shown clearly in fig. 4, core 4 comprises a number of threads 8, for instance seven threads. The threads are elastic. Jacket 6 comprises an elastic moisture-absorbing material. Jacket 6 has a thickness which is preferably small relative to the radius of core 4.

Fig 3 shows a bottle 10 provided with a drip catcher 1 according to the present invention. The inner diameter D1 (fig. 1) of the annular collecting member 2 is a little smaller than the outer diameter of the (neck of the) bottle for which the drip catcher is intended. Inner diameter D1 is in practice in the order of for instance 25 mm. The thickness of the ring, i.e. diameter D2, can be relatively small. Diameter D2 is for instance between about 1.5 and about 4 mm.

The operation of the drip catcher of fig. 1-4 is based as follows on the combination of thread bundle 4 and jacket 6. After drink has been poured out of bottle 10 the bottle is put down in upright position, wherein a droplet 12 runs downward from the bottle opening 14 along neck 16 of the bottle in the direction of drip catcher 1. Collecting channel 18 is situated between bottle neck 16 and drip catcher 1 As soon as droplet 12 reaches the collecting channel, it is spread around bottle neck 16 due to the capillary action and the surface tension of the moisture of droplet 12. The droplet is herein absorbed by jacket 6. In addition, the droplet is suctioned into the drip catcher by the capillary action of the spaces between threads 8. Due to the combined adsorption by thread bundle 4 and jacket 6 the drip catcher can already provide a sufficient adsorption with a small diameter D2.

The (wine) bottles offered for sate in a retail premises are often provided with a label on which is arranged information relating to the content of the bottle. US-1,853,622 provides such a label comprising a card provided with an opening for the neck of a bottle. The function of the known label is however limited to the retail premises. After purchase of the bottle the label is immediately discarded.

The application options of a drip catcher as described above can be extended by combining thereof with a label element, such as a (post)card, decorative element, label and/or door handle.

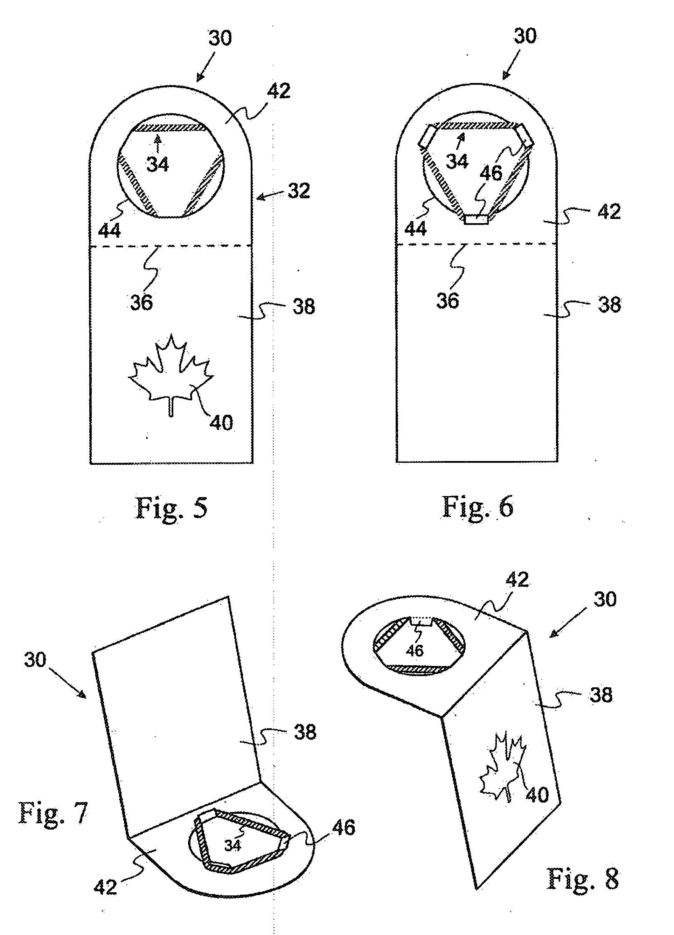

Figures 5-8 show a drip catcher 30 comprising a label element 32 coupled to a collecting member 34 for collecting droplets. The collecting member comprises for instance a drip catcher as described with reference to figures 1-4. The label elements is for example a card provided with a bend line 36. A first part 38 of the card can be provided with a random imprint 40, such as an informative text and/or advertising. A second part 42 can be bent along bend line 36 relative to the first part, and is provided with an opening 44 for a bottle neck. The edge of opening 44 is provided with a number of upright projections 46, for instance three, around which the collecting member 34 is hooked.

Card 32 is for instance of cardboard or plastic. The bend line can form a weakened portion so that the first and second part can be given a firmer form.

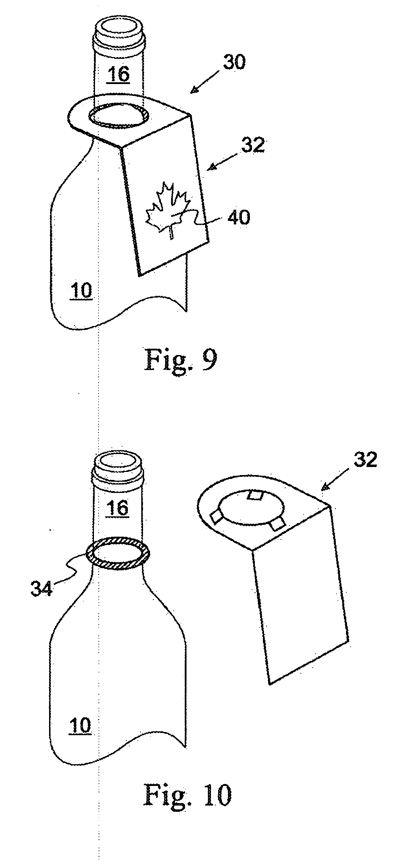

Fig. 9 shows the use of the drip catcher of fig. 5-8. Drip catcher 30 is arranged with opening 44 round neck 16 of bottle 10, while information 40 is arranged on the label 32 attached thereto. Collecting member 34 herein provides for a clamping attachment around the neck, so that the label attached thereto can be arranged at a random height along neck 16.

As shown in fig. 10, a consumer can remove the label after buying the bottle, wherein the collecting member remains behind around the neck and will still function as drip catcher.

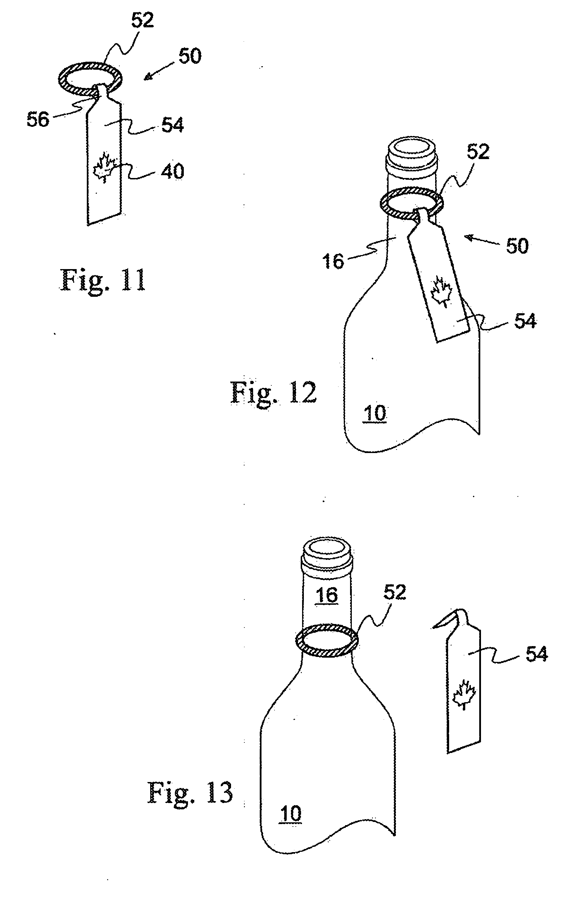

In another embodiment (fig. 11-13) drip catcher 50 comprises a collecting member 52 and a label 54 coupled thereto. Label 54 is for instance an elongate strip with a folded part 56 on an outer end for the purpose of forming a breakable coupling to the collecting member (fig. 11). The label is provided with a random imprint 40.

During use the drip catcher is arranged round neck 16 of bottle 10. The label can be removed from the collecting member by breaking the folded part 56, as shown in fig. 13.

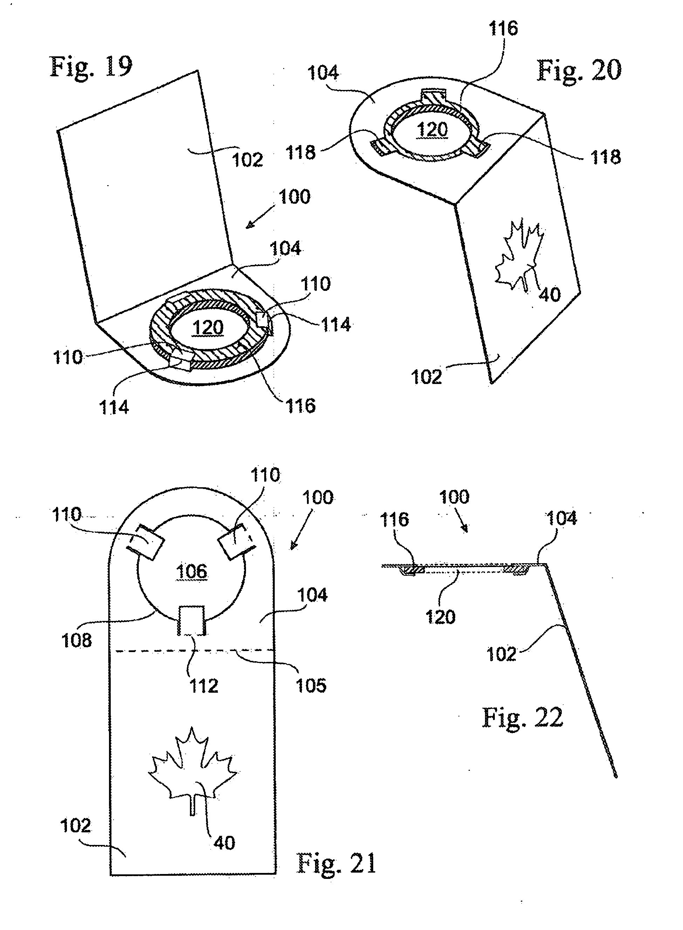

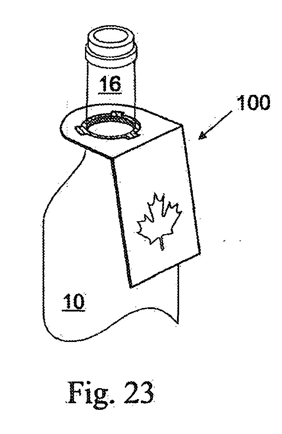

Another embodiment (fig. 19-23) of drip catcher 100 comprises a card-line body comprising a first part 102 and a second part 104. Second part 104 can be bent along a bend line 105 relative to first part 102 (fig. 21). Arranged in second part 104 is an opening 106 with a side edge 108 provided with a number of, for instance two, three or four protrusions 110. Protrusions 110 can be folded twice along fold lines 112 and 114. A collecting member 116 can be arranged between the folded protrusions 110 and second part 104 (fig. 19, 20, 22). The folded protrusions leave openings 118 in the second part. Collecting member 116 is a flat ring of a constant thickness. The ring has a smooth outer edge and a smooth inner edge. The ring is provided in the middle with an opening 120 (fig. 19) for arranging of the ring around the neck of a bottle (fig. 23).

The use of drip catcher 100 corresponds to the use of the above described embodiments.

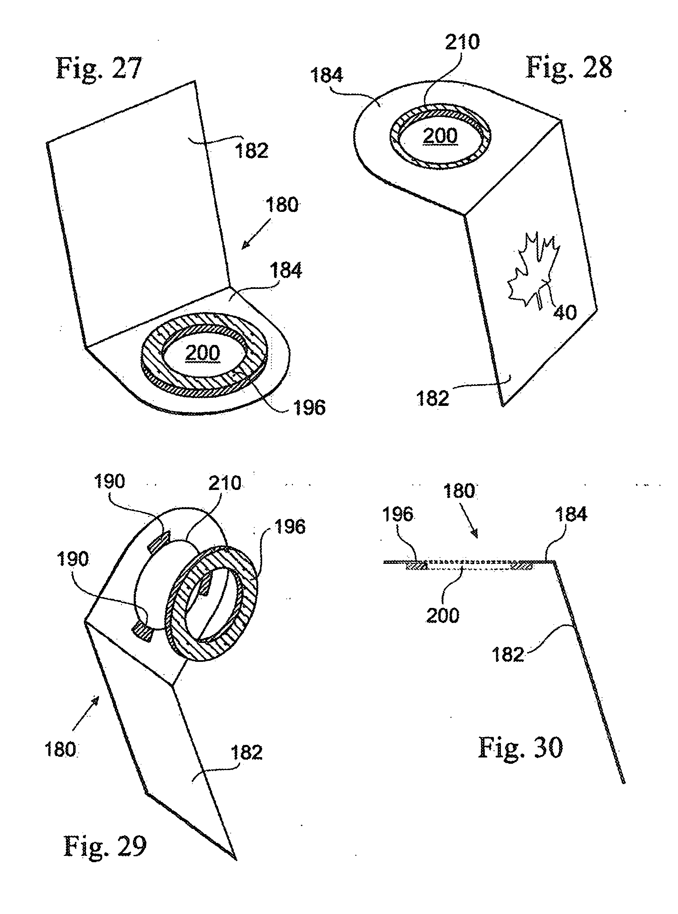

In another embodiment as shown in fig. 27-30, drip catcher 180 comprises a label element comprising a first part 182 and a second part 184. In the shown embodiment the first and second part are parts of a card-like label attached in bendable manner to each other. Arranged in the second part is an opening 210 which coincides with an opening 200 in the centre of annular collecting member 196.

Collecting member 196 substantially corresponds to collecting member 116 as described with preference to and shown in fig. 19-23.

Collecting member 196 is coupled to second part 184 by means of adhesive connections 190, The adhesive connections are provided with a suitable adhesive, such as glue or double-sided adhesive tape. The adhesive convection between collecting member 196 and the label is preferable easy to break, for instance in that the glue has a relatively small adhesive force.

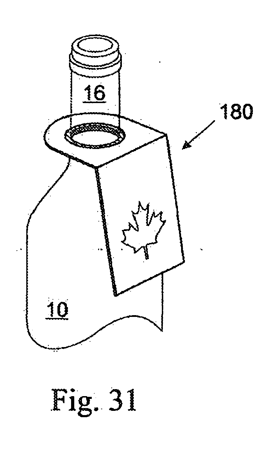

Fig. 31 shows bottle 10 with neck 16 around which drip catcher 180 is arranged. Imprint 40 is applied to drip catcher 180.

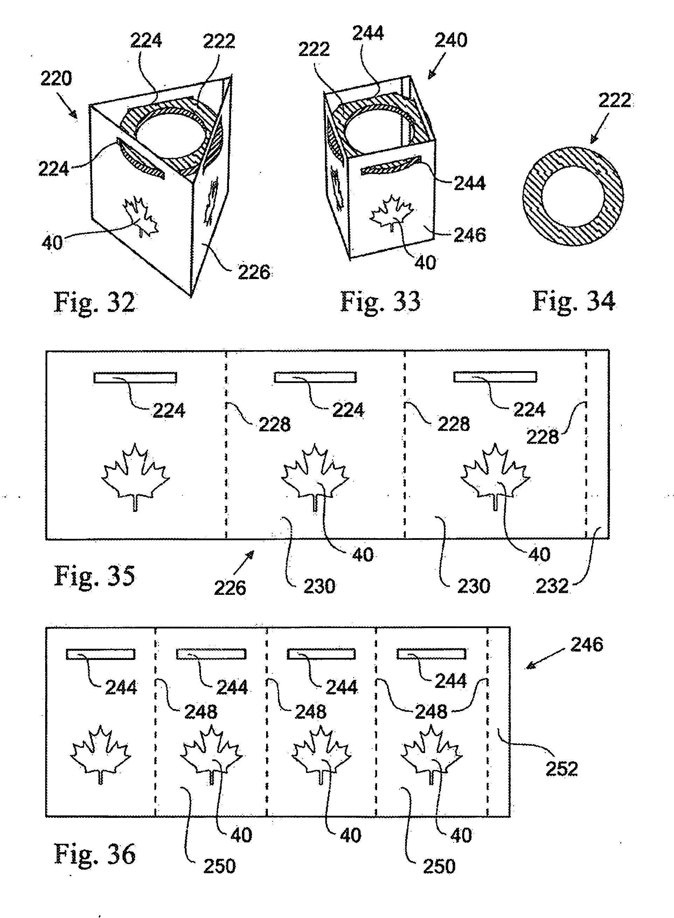

Fig. 32 shows drip catcher 220 which is provided with a collecting member 222 arranged in slots 224 of label 226. Collecting member 222 substantially corresponds to one or more of the above described collecting members 52, 116, 196. Label 226 has a tubular form which is triangular in top view. The label is provided at random locations with a random imprint 40.

Fig. 33 shows drip catcher 240 which is provided with a collecting member 222 arranged in slots 244 of label 246. Label 246 has a tubular form which is substantially square or elongate in top view. The label is provided at random locations with a random imprint 40.

Fig. 34 shows collecting member 222 separately. After removal of the label the collecting member will remain behind around the liquid container for the purpose of collecting droplets.

Fig. 35 shows label 226 in folded-open position. Label 226 comprises an elongate card in which slots 224 are arranged and which is provided with a number of fold lines 228. Straight surfaces 230 are formed between the fold lines. At an outer end the card is provided with a protruding edge 232.

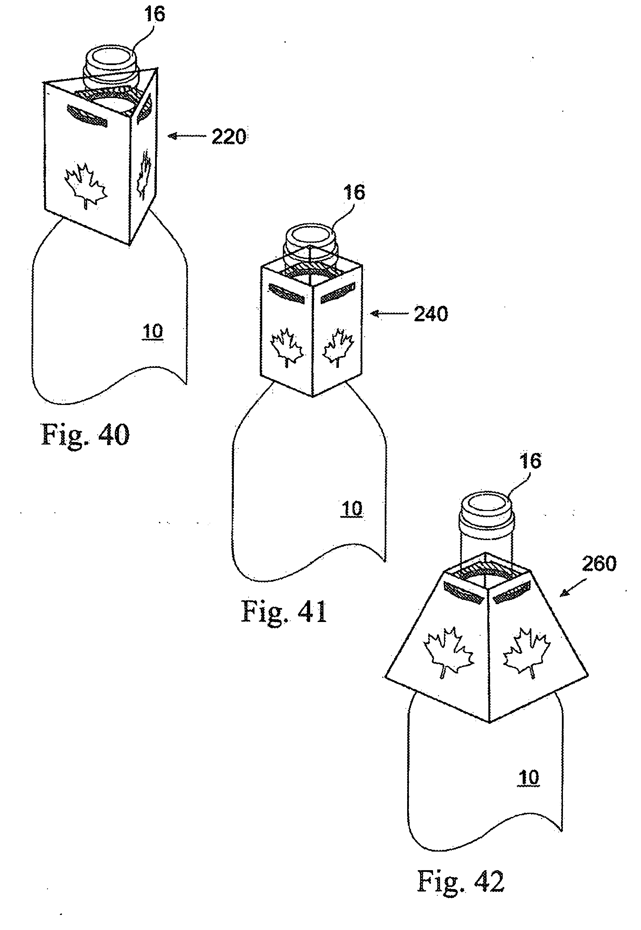

One or more imprints 40 are applied to one side of the card. In use this will be the visual side, see fig. 32 and fig. 40. The other side of the card can likewise be printed, but generally remains blank or plain.

In order to obtain the form as shown in fig. 32 the surfaces 230 are folded along folding edges 228. Edge 232 is then attached to the inner side of the opposite outer end of the card, for instance by glueing and/or stapling.

Fig. 36 shows label 246 in folded-open position. Label 246 comprises an elongate card provided with slots 244 and fold lines 248 for the purpose of forming surfaces 250. At an outer end the card is provided with protruding edge 252 with a function corresponding to the function of edge 232.

As shown in fig. 35 and 36, any desired number of surfaces 230, 250 can be formed by providing the card with a corresponding number of fold lines. Tubular forms can thus be obtained which are triangular (fig. 32) or square (fig. 33), but also shapes with five; six or more sides in top view.

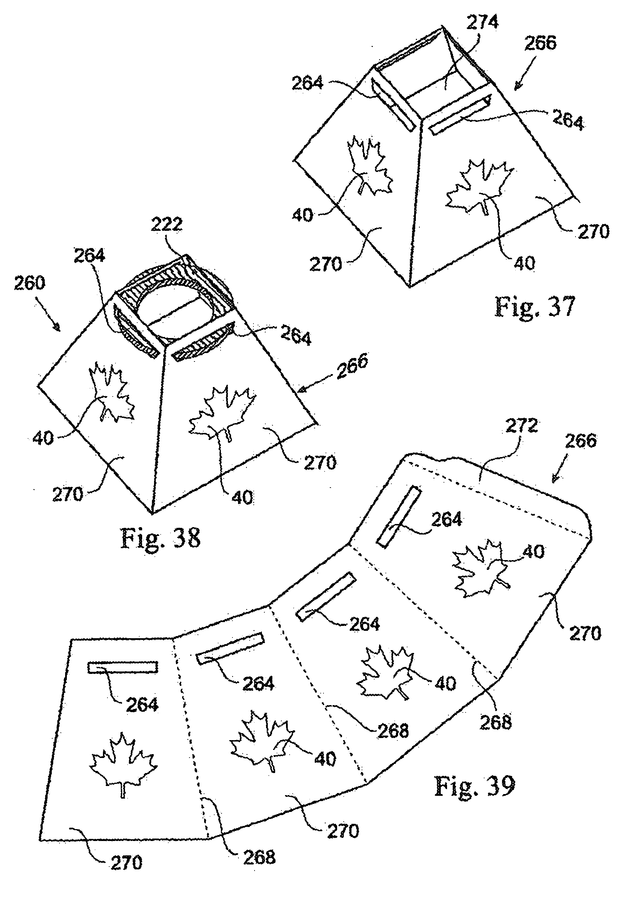

Fig. 38 shows drip catcher 260 which is provided with a collecting member 222 arranged in slots 264 of label 266.

Label 266, which is shown separately in fig. 37, has a pyramid form with an open top side, i.e. the top of the pyramid has been removed and leaves an opening 274, for instance for a bottle neck. The label is provided at random locations with a random imprint 40.

Fig. 39 shows label 266 in folded-open position. The label comprises a card provided with fold lines 268 for forming surfaces 270. At an outer end the card is provided with an adhesive edge 272. Since the surfaces 270 for forming a pyramid have a wider basle and a narrower top, fold lines 268 are arranged at an angle to each other. The angle, which is for instance between 15 and 25 degrees, likewise determines the inclination of surfaces 270 in the folded position (fig. 37).

Fig. 40, 41 and 42 show a bottle 10 with a neck 16 provided with the drip catcher of fig. 32, 33 and 38 respectively. The use substantially corresponds to that of the drip catchers as described above.

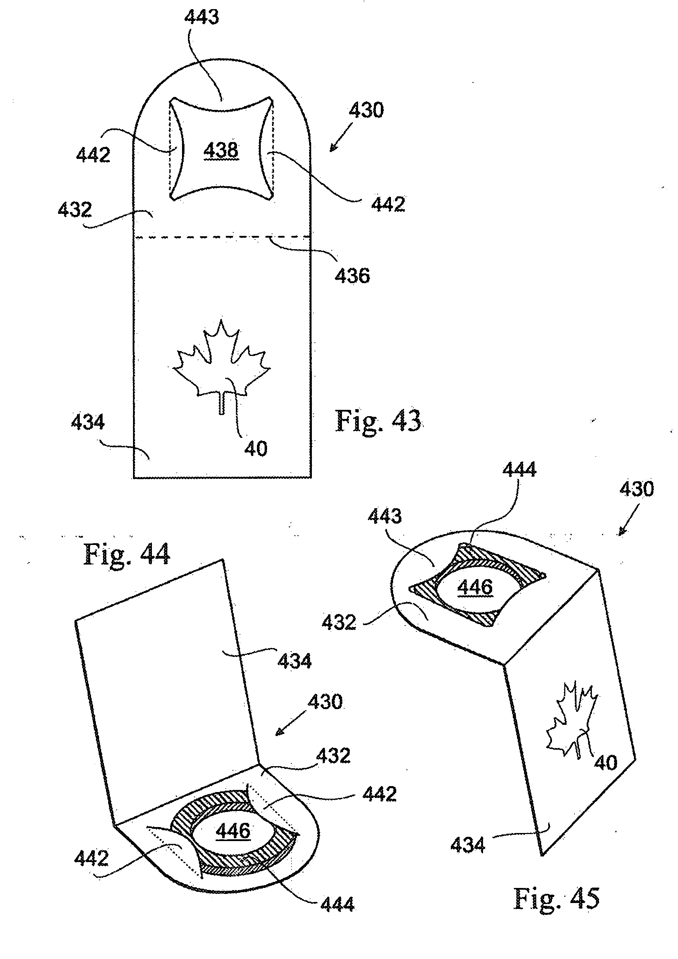

Fig. 43-45 show an embodiment of drip catcher 430 comprising a card-like, elongate label 434 with imprint 40 and fold line 436. Arranged in the label is opening 438 with edges which form curved bulges 442, 443. A disc-like collecting member 444 is clamped between bulges 442 on the one side and bulges 443 on the other.

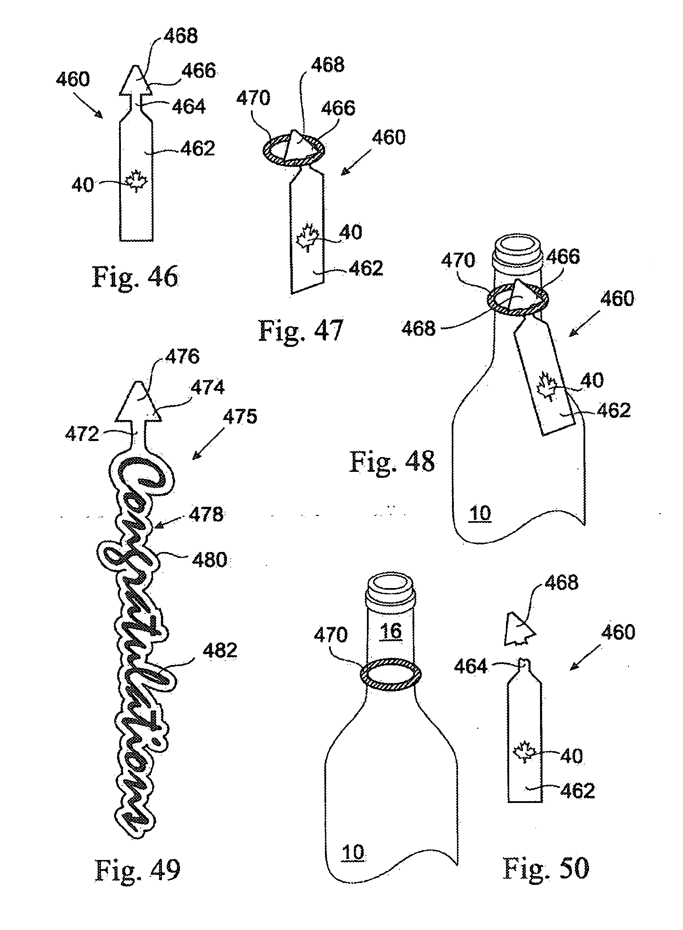

Fig. 46-48 and 50 show an embodiment of drip catcher 460 comprising elongate label 462 with imprint 40, narrowed portion 464 and arrow-shaped outer end 468. The arrow-shaped portion 468 has an edge 466 with which the outer end can be hooked behind collecting member 470 (fig. 47) and can be arranged thus round a bottle neck 16 (fig. 48). The narrowed portion 464 is chosen such that the label can be easily torn with the hand at the position of the narrowed portion in order to be removed (fig. 50).

Fig. 49 shows label 475 with elongate part 478 to which lettering 482 has been applied. The contour 480 of part 478 substantially follows lettering 482. Label 475 comprises narrowed portion 472 and arrow-shaped outer end 476 with edge 474. The use of label 475 corresponds to the use of label 460.

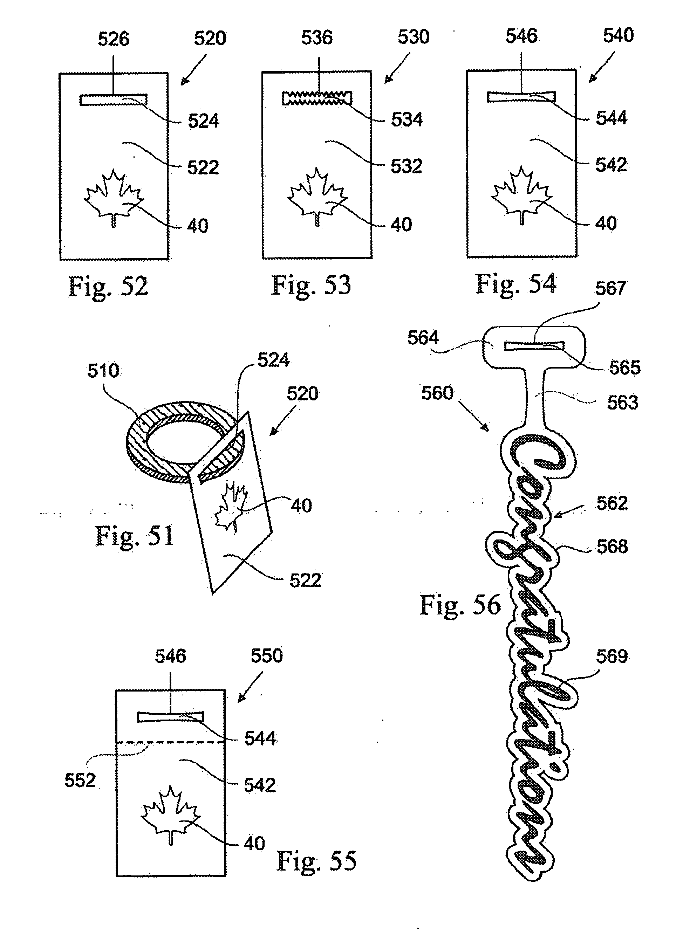

Fig. 51 shows drip catcher 520 provided with label 522 with imprint 40 and collecting member 510. The collecting member corresponds for instance to the collecting member shown in fig. 19. Arranged in label 522 is slot 524 (fig. 52) in which collecting member 510 can be arranged clampingly and releasably as shown in fig. 51. Slot 524 has a straight edge 526.

Fig. 53 shows label 532 of drip catcher 530 in which slot 534 is arranged. In order to improve the releasable connection to the collecting member, the edge of slot 534 comprises serrations 536.

Fig. 54 shows label 542 of drip catcher 540 in which slot 544 is arranged. In order to improve the releasable connection to the collecting member, the edge of slot 544 comprises curved bulges 546.

Fig. 55 shows label 550 with elongate portion 542 which is connected via bend line 552 to a portion in which slot 544 with edge 546 is arranged.

Fig. 56 shows a label 560 for a drip catcher according to the invention provided with elongate part 562 to which lettering 569 has been applied. The contour 568 of part 562 substantially follows lettering 569. Label 560 has narrowed portion 563 which is connected to widened portion 564 in which slot 565 witch curved bulges 567 is arranged.

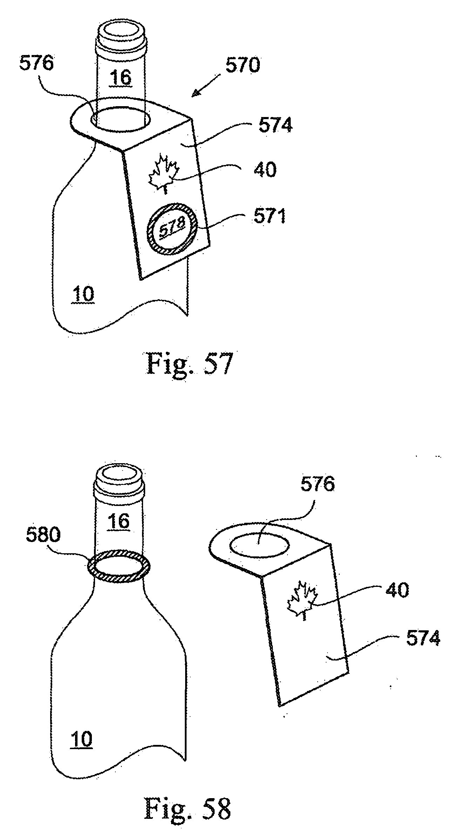

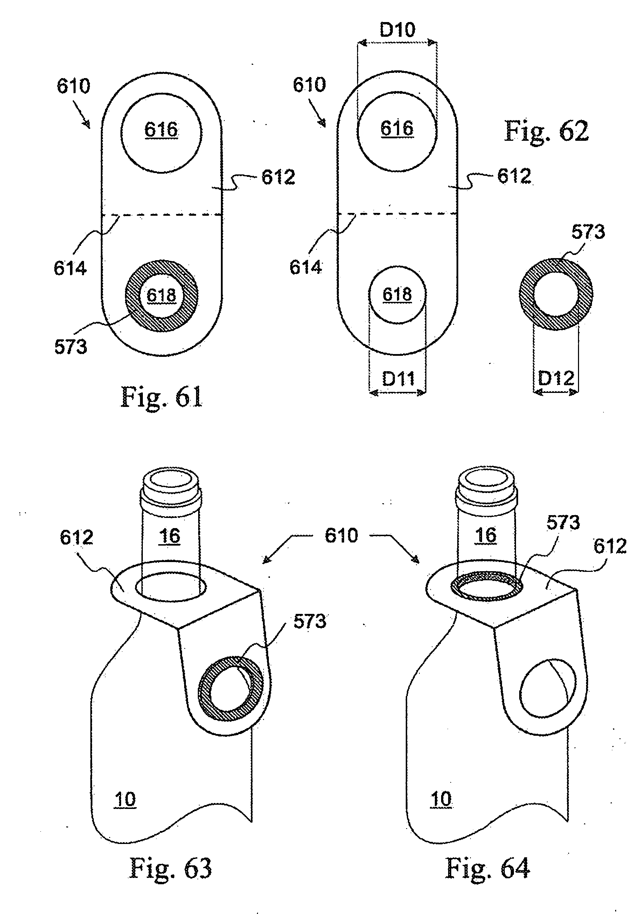

Fig. 57-64 show commercially attractive embodiments of a label combined with a collecting member to form a drip catcher according to the invention. The shown embodiments form a combination which is relatively inexpensive to produce and which can herein be arranged with a standard automatic Label applicator, usually without this applicator halving to be modified, i.e. in the drip catchers shown in fig. 57-64 there is no relation between the collecting member and the manner in which the drip catcher has been or is arranged round the liquid container. Drip catcher 610 is usually attached round the liquid container as shown in figure 63, wherein the collecting member is arranged around the second opening, i.e. not round the neck of the liquid container.

Automatic label applicators have replaced manual arrangement of hanging bottle labels. An automatic label applicator arranges for instance an average of 350 labels per minute (or more than 5 per second). The labels are supplied from a roll and are severed in the applicator and subsequently arranged round the neck of the bottle. The automatic tabel applicators are designed to arrange paper and/or plastic labels round bottle necks. The automatic label applicator must sometimes be modified in order to arrange disc-like (EVA) collecting members of the drip catchers.

The drip catchers shown in fig. 57-64 form a combination of label and drip catcher which can be arranged with standard equipment.

In fig. 57 drip catcher 570 comprises a collecting member 571 which is attached to label 574 with for instance glue. Two openings 576, 578 are arranged in label 574. Collecting member 571 is arranged around opening 578 and can thus be easily removed. Collecting member 571 substantially corresponds to for instance a collecting member as shown in fig. 1-4 or fig. 19. Opening 576 is left clear, whereby it can be arranged round bottle neck 16 by the automatic label applicator.

In fig. 58 the label comprises a single opening 576 with which the label can be arranged round bottle neck 16 by the automatic label applicator. Collecting member 580 substantially corresponds to for instance a collecting member as shown in fig. 1-4 or fig. 19. Collecting member 580 is for instance glued to the back of label 574, i.e. on the non-visual side.

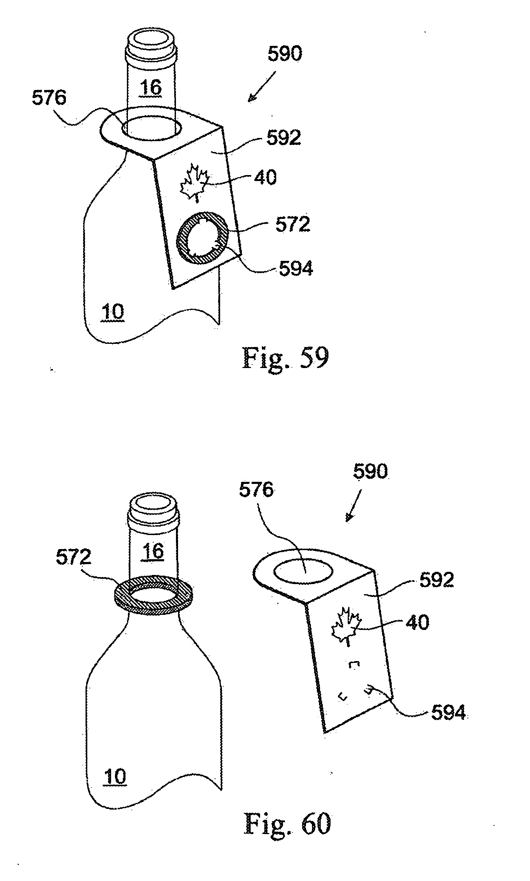

In figures 59 and 60 a drip catcher 590 is shown comprising a collecting member 572 and a label 592. The collecting member corresponds to for instance collecting member 116 in fig. 19. Label 592 is provided with opening 576 with which the label can be arranged round bottle neck 16 by the automatic label applicator. The label is further provided with a number of protrusions 594 (for instance three) to clamp the collecting member releasably to the label. Protrusions 594 are for instance relatively small, folded-back parts of the label.

Fig. 61-64 show a drip catcher 610 comprising a collecting member 573 attached to label 612. Two openings 616, 618 are arranged in label 612. Opening 616 has a diameter D10 which fits loosely round neck 16, while opening 618 has a smaller diameter D11. Arranged around opening 618 is collecting member 573 with an inner diameter D12 which is smaller than diameter D11, Label 612 can thus be attached round bottle neck 16 with drip catcher 573 as well as with the standard label hole 616.

Opening 616 has a larger diameter than a bottle neck 16. Opening 618 has a larger diameter than the inner diameter D12 of drip catcher 573. The combination 610 of label with drip catcher can be arranged over a bottle neck 16 such that drip catcher 573 is visible (i.e. on the front of the label) or invisible (i.e. behind the label).

The drip catcher has in practice a thickness of about 1 to 5 mm. The material used is, in addition to being adsorbent, also elastic. A suitable material comprises felt, polymer foam, cardboard, material such as cotton, or combinations thereof.

In use the drip catcher is arranged round bottle 10. The label can be removed so that the collecting member remains behind on the bottle.

The imprint can be applied to any desired part of the drip catcher, such as on the first part or the second part of the label element and/or on the collecting member.

The production costs of the drip catcher according to the present invention are low enough to provide bottles with the drip catcher prior to purchase. The drip catcher thus offers companies an attractive option for providing the bottles and other liquid containers they offer with a distinctive feature. The use of the drip catcher will also increase because it is already arranged round the bottle.

In all the above described embodiments the collecting member of the drip catcher can have a colour, for instance (dark) red or black, such that it corresponds to or is darker than the liquid in the liquid container. Absorbed liquid, for instance red wine, does not therefore result, or hardly so, in visible discoloration of the collecting member.

The present invention is not limited to the above described embodiments thereof, in which many modifications are possible within the scope of the appended claims.

## Claims

1. Drip catcher (1) for a liquid container (10), comprising an at least partially elastic collecting member (2) for collecting droplets during pouring of liquid out of the liquid container, wherein the collecting member comprises an elastic part substantially for exerting a clamping force, and an absorbent part co-acting with the elastic part for the purpose of absorbing the droplets, and **characterized in that** the elastic part of the collecting member comprises a core (4) of a number of bundled elastic threads (8).

2. Drip catcher as claimed in claim 1, comprising a label element coupled to the collecting member.

3. Drip catcher as claimed in claim 2, wherein the label element is an elongate card.

4. Drip catcher as claimed in claim 2 or 3, wherein the label element comprises a first opening with an edge provided with a number of protrusions for coupling the label element and the collecting member.

5. Drip catcher as claimed in claim 4, wherein the label element is coupled releasably to the collecting member, and wherein a label element detached from the collecting member comprises a second opening for the purpose of arranging the label element therewith to for instance a door handle.

6. Drip catcher as claimed in any of the claims 3-5, wherein the label element comprises:
- a first opening for coupling thereto of the collecting member, and
- a second opening for arranging the label element therewith round the liquid container.

7. Drip catcher as claimed in claim 2 or 3, wherein the label element extends around the whole liquid container and comprises a card folded along fold lines for the purpose of forming a spatial form.

8. Drip catcher as claimed in claim 7, wherein the spatial form comprises a triangular container, a substantially square beam and/or a pyramid form.

9. Drip catcher as claimed in claim 2 or 3, wherein the label element is a door hanger.

10. Drip catcher as claimed in claim 1, wherein the absorbent part of the collecting member comprises a jacket of an absorbent material arranged round the core.

11. Drip catcher as claimed in claim 10, wherein the jacket is relatively thin compared to the core.

12. Method comprising of the use of a drip catcher (1) as claimed in one or more of the claims 1-11.

## Patentansprüche

1. Tropfenfänger (1) für einen Flüssigkeitsbehälter, der ein wenigstens teilweise elastisches Auffangelement (2) umfasst, mit dem beim Ausgießen von Flüssigkeit aus dem Flüssigkeitsbehälter Tröpfchen aufgefangen werden, wobei das Auffangelement ein elastisches Teilelement, mit dem im Wesentlichen eine Klemmkraft ausgeübt wird, sowie ein absorbierendes Teilelement umfasst, das mit dem elastischen Teilelement zusammenwirkt, um die Tröpfchen zu absorbieren, und **dadurch gekennzeichnet, dass** das elastische Teilelement des Auffangelementes einen Kern (4) aus einer Anzahl gebündelter elastischer Fäden (8) umfasst.

2. Tropfenfänger nach Anspruch 1, der ein Etikett-Teil umfasst, das mit dem Auffangelement verbunden ist.

3. Tropfenfänger nach Anspruch 2, wobei das Etikett-Teil eine längliche Karte ist.

4. Tropfenfänger nach Anspruch 2 oder 3, wobei das Etikett-Teil eine erste Öffnung mit einem Rand umfasst, der mit einer Anzahl von Vorsprüngen zum Verbinden des Etikett-Teils und des Auffangelementes versehen ist.

5. Tropfenfänger nach Anspruch 4, wobei das Etikett-Teil lösbar mit dem Auffangelement verbunden ist und ein von dem Auffangelement getrenntes Etikett-Teil eine zweite Öffnung umfasst, mit der das Etikett-Teil beispielsweise an einem Türgriff angeordnet wird.

6. Tropfenfänger nach einem der Ansprüche 3-5, wobei das Etikett-Teil umfasst:
- eine erste Öffnung zum Verbinden des Auffangelementes damit, und
- eine zweite Öffnung zum Anordnen des Etikett-Teils damit um den Flüssigkeitsbehälter herum.

7. Tropfenfänger nach Anspruch 2 oder 3, wobei sich das Etikett-Teil um den gesamten Flüssigkeitsbehälter herum erstreckt und eine Karte umfasst, die an Falzlinien gefaltet ist, um eine räumliche Form zu bilden.

8. Tropfenfänger nach Anspruch 7, wobei die räumliche Form einen dreieckigen Behälter, einen im Wesentlichen quadratischen Kasten und/oder eine Pyramidenform umfasst.

9. Tropfenfänger nach Anspruch 2 oder 3, wobei das Etikett-Teil ein Türhänger ist.

10. Tropfenfänger nach Anspruch 1, wobei das absorbierende Teilelement des Auffangelementes eine Ummantelung aus einem absorbierenden Material umfasst, die um den Kern herum angeordnet ist.

11. Tropfenfänger nach Anspruch 10, wobei die Ummantelung verglichen mit dem Kern relativ dünn ist.

12. Verfahren, das den Einsatz eines Tropfenfängers (1) nach einem oder mehreren der Ansprüche 1-11 umfasst.

## Revendications

1. Ramasse-gouttes (1) pour un récipient de liquide (10), comprenant un élément de collecte au moins partiellement élastique (2) pour collecter des gouttes pendant le versement de liquide hors du récipient de liquide, dans lequel l'élément de collecte comprend une partie élastique sensiblement pour exercer une force de serrage, et une partie absorbante co-agissant avec la partie élastique afin d'absorber les gouttes, et **caractérisé en ce que** la partie élastique de l'élément de collecte comprend un noyau (4) composé d'un certain nombre de fils élastiques (8) en faisceau.

2. Ramasse-gouttes selon la revendication 1, comprenant un élément d'étiquette couplé à l'élément de collecte.

3. Ramasse-gouttes selon la revendication 2, dans lequel l'élément d'étiquette est une carte allongée.

4. Ramasse-gouttes selon la revendication 2 ou 3, dans lequel l'élément d'étiquette comprend une première ouverture avec un bord doté d'un certain nombre de saillies pour coupler l'élément d'étiquette et l'élément de collecte.

5. Ramasse-gouttes selon la revendication 4, dans lequel l'élément d'étiquette est couplé de manière détachable à l'élément de collecte, et dans lequel un élément d'étiquette détaché de l'élément de collecte comprend une deuxième ouverture afin de disposer l'élément d'étiquette avec ce dernier par exemple sur une poignée de porte.

6. Ramasse-gouttes selon l'une quelconque des revendications 3 à 5, dans lequel l'élément d'étiquette comprend :
une première ouverture pour le couplage de l'élément de collecte, et
une deuxième ouverture pour agencer l'élément d'étiquette autour du récipient de liquide.

7. Ramasse-gouttes selon la revendication 2 ou 3, dans lequel l'élément d'étiquette s'étend autour de tout le récipient de liquide et comprend une carte pliée le long de lignes de pliage afin de former une forme spatiale.

8. Ramasse-gouttes selon la revendication 7, dans lequel la forme spatiale comprend un récipient triangulaire, une poutre sensiblement carrée et/ou une forme pyramidale.

9. Ramasse-gouttes selon la revendication 2 ou 3, dans lequel l'élément d'étiquette est une affichette de porte.

10. Ramasse-gouttes selon la revendication 1, dans lequel la partie absorbante de l'élément de collecte comprend une chemise réalisée avec un matériau absorbant agencé autour du noyau.

11. Ramasse-gouttes selon la revendication 10, dans lequel la chemise est relativement fine par rapport au noyau.

12. Procédé comprenant l'utilisation d'un ramasse-gouttes (1) selon une ou plusieurs des revendications 1 à 11.
